# EUROPEAN PATENT APPLICATION

(11) **EP 2 816 441 A1**
(43) Date of publication of application: **24.12.2014**
(21) Application number: 14171423.8
(22) Date of filing: 05.06.2014
(51) Int. Cl.: G06F 1/16, G06F 3/01

(54) **Hands-free user interface for security systems**

(30) Priority: 19.06.2013 US 201313921683
(71) Applicant: Honeywell International Inc., Morristown, NJ 07962-2245 (US)
(72) Inventor: Probin, Robert John, Morristown, NJ 07962-2245 (US); Schmit, Thomas Paul, Morristown, NJ 07962-2245 (US)
(74) Representative: Houghton, Mark Phillip

(57) **Abstract**

A monitoring, control and guidance system can be equipped with portable, hands-free interfaces. Personnel in a region being monitored can wear or carry such interfaces so as to be able to interact with monitoring system control elements scattered throughout the region. A user can be guided from point-to-point in the region as needed. Alternately, the user can request a map of some or all of the region as well as conditions therein. That map can then be presented on the user's interface unit.

## Description

### FIELD

The application pertains to human-computer interfaces for use with control, monitoring, or guidance systems and methods used in monitoring various conditions in regions of interest. More particularly, the application pertains to such systems and methods which incorporate wireless, wearable interfaces.

### BACKGROUND

Current user interfaces for security systems, intrusion, access, video, are limited to either PC interfaces, smart phones, tablets or custom 'keypad' type displays. None of these are ideal for system installation or security guard use. This non-interactivity with the real world, non-hands-free, non-wireless approach significantly limits other tasks that can be performed as well as how well they can be performed. Such tasks include installer walk tests, new system commissioning, large facility walk-throughs and incident investigations by security and facility management personnel.

### BRIEF DESCRIPTION OF THE DRAWING

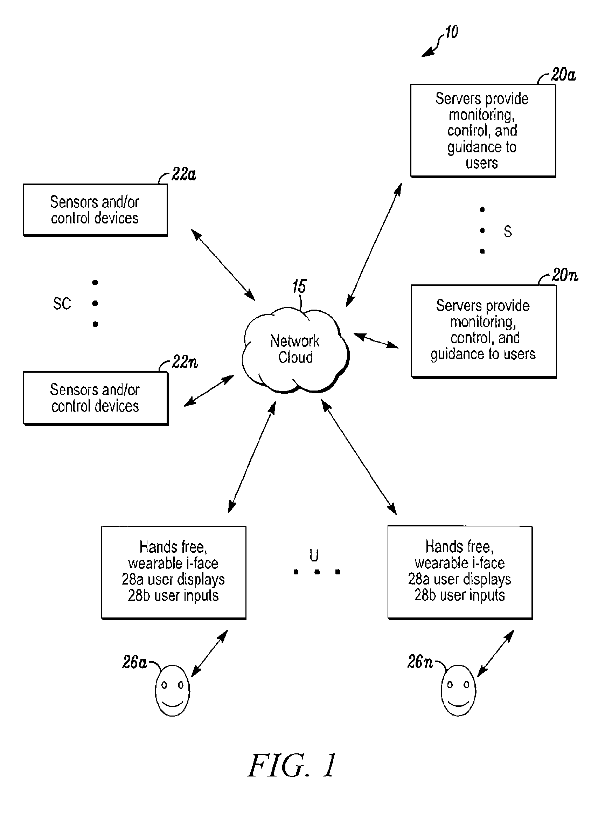

Fig. 1 illustrates a block diagram of a system in accordance herewith.

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated.

In one aspect hereof, a wireless, wearable, hands-free interface provides real-time bidirectional communications with a displaced control unit or other elements of a monitoring system. For example, a lone security guard on foot, after hours in a large facility who is wearing a hands free display can simultaneously be performing a routine tour or investigating some unusual activity. With such capabilities, that person is able to select and view any of the site's cameras as well as the status of control points and security sensors. This significantly improves the effectiveness and efficiency of the process. For example another guard need not remain in the security monitoring center to relay the above information in non-real-time via voice. The hands-free aspect is a significant improvement over hands-on use of a smart phone or tablet. This arrangement also allows more effective coordination and improved safety when multiple guards are roaming a large facility.

The same scenario would apply to anyone that monitors a facility and normally uses a monitoring center, smart phone, or tablet to maintain an overview of the facility while walking around while enabling that individual to 'drill down' to specific aspects of the facility's function. Examples include, the plant managers of refineries or chemical processing plants. System installers/engineers could wear such interfaces and communicate via a displaced system console while physically visiting system peripherals located throughout the site.

Embodiments hereof enable an installer to more efficiently and accurately configure and adjust detection points, access doors, other system inputs such as device registration, configuration and tuning of parameters, detection timings, or response types.

Various types of detailed diagnostic information from the system controller would be immediately available irrespective of that person's location at the site. Camera commissioning, test and review of video all become fast and natural. Time reduction and system installation cost saving could be massive. The user input interface could be based on detection of speech, eye position, gestures, or any other method which enables direct real-time communications with displaced system elements and which leaves the operator's hands free for other actions.

Point-to-point routes can be presented to the user on the wireless, wearable, hands-free display. Alternately, a map of some or all of the region of interest along with conditions therein can be presented to the user.

Fig. 1 is a block diagram of an apparatus 10 in accordance herewith. The apparatus 10 is used and installed in a region R, of the general types discussed above, being monitored.

Apparatus 10 includes a monitoring system having a plurality of monitoring, control and guidance servers 20 which are in communication with a plurality of elements 22. Members of the plurality 22 can include intrusion, position and ambient condition-type detectors without limitation. Additional elements can include monitoring cameras of all types, access control units, and audible or visual input output devices for communicating with individuals, or users, indicated at U involved in monitoring and addressing conditions, equipment and the like all without limitation.

It will be understood that communications between various components of the system 10 can be via various types of network cloud based services 15. For example, members of the plurality 22 can communicate via local area networks, or Wi-fi-type networks, with the server 20 which might be located displaced from the region R being monitored. Alternately, members of the plurality 22 could be internet enabled and communicate via wide area networks, for example the Internet, with the server 20 as well as interfaces 26 discussed below. Further communications and processing can be provided to the members of the plurality 22, the server 20 as well as interfaces 26 via a cloud based service. Finally, those various components can communicate directly with one another via local wireless network in the region R.

Each of the users U can be equipped with a hands free, wireless, wearable wireless interface indicated at 26a, 26b, 26c... 26n. One such exemplary interface is commercially available under the Golden-i 3.8 Headset brand marketed by Kopin Corporation. Other available wireless interfaces could also be used. Those of skill will understand that a wide variety of wireless headsets having differing characteristics can be used, without limitation, and without departing from the spirit and scope hereof. Wireless interfaces such as 26n can include control circuits 28a in a wireless, wearable housing which can support a user interactive display as well as user inputs indicated at 28b.

Users U each wearing one of the interface units 26i can roam the types of facilities cited above to investigate or monitor on-going conditions or activities in those facilities while being in continual communications with the monitoring system control server 20 as well as individual members 22i of the plurality of elements 22.

The respective interface, 26i can respond to user audible, visual or other type inputs 28b to transmit requests or commands to the servers 20, or the individual elements 22i. Feedback in response to such requests or commands can be communicated to the respective interface 26i as well as the server 20 simultaneously while the respective user U is carrying on other related activities.

In summary, guidance can be provided to the user on a point-to-point basis to facilitate efficient movement in the region. Alternately, maps of some or all of the region can be forwarded to and displayed for the user as that person is moving through the region being monitored.

From the foregoing, it will be observed that numerous variations and modifications may be effected without departing from the spirit and scope hereof. It is to be understood that no limitation with respect to the specific apparatus illustrated herein is intended or should be inferred. It is, of course, intended to cover by the appended claims all such modifications as fall within the scope of the claims. Further, logic flows depicted in the figures do not require the particular order shown, or sequential order, to achieve desirable results. Other steps may be provided, or steps may be eliminated, from the described flows, and other components may be add to, or removed from the described embodiments.

## Claims

1. An apparatus comprising:
a monitoring, control, and guidance system; and
at least one wireless, wearable, hands free interface coupled to the monitoring system wherein requests for information can be wirelessly forwarded to the monitoring system.

2. An apparatus as in claim 1 where the wireless, hands free device responds to at least one of visual inputs, audible inputs, motion inputs.

3. An apparatus as in claim 1 where the monitoring system includes at least a plurality of detectors and monitoring cameras wherein the interface provides hands free access to detector, or, camera feedback.

4. An apparatus as in claim 1 where the interface provides feedback as to various conditions detected by elements of the monitoring system.

5. An apparatus as in claim 1 where the interface includes control circuits to acquire human initiated inputs, and convert same to electrical signals and communications circuits to communicate representations of such signals to monitoring and control system elements including at least one of a plurality of intrusion, access, video elements and ambient condition detectors.

6. An apparatus as in claim 5 which includes a plurality of hands free interfaces and where at least some of the interfaces provide wearable, hands-free visual displays.

7. An apparatus as in claim 5 which includes at least one monitoring, control, and guidance server in communication with the at least one interface.

8. An apparatus as in claim 1 which includes one or more of intrusion detectors, video-type surveillance cameras, and access control units.

9. An apparatus as in claim 5 wherein point-to-point guidance can be provided to the interface between selected locations in the region, or, a map of the region can be provided to the interface.

10. A method comprising:
establishing a region to be monitored;
installing detectors and other monitoring elements in the region;
providing a portable, wireless, hands free interface; and
interacting wirelessly with at least some of the elements via the hands free interface to obtain local condition related information in real-time.

11. A method as in claim 10 which includes coupling information as to selected conditions in the region, to the hands free interface.

12. A method as in claim 11 which includes displaying or presenting audibly at least some of the coupled information at the interface.

13. A method as in claim 12 which includes responding to commands from the interface to alter settings of at least some elements in the region.

14. A method as in claim 13 which includes providing feedback to the interface as to installation status of recently installed elements in the region.

15. A method as in claim 10 which includes providing real-time video images, from at least one specified camera, at the hands free interface in response to a request from that interface.
